# EUROPEAN PATENT SPECIFICATION

(11) **EP 0 489 976 B1**
(45) Date of publication and mention of the grant of the patent: **17.08.1994**
(21) Application number: 90203250.7
(22) Date of filing: 11.12.1990
(51) Int. Cl.: F01P 11/12, B01D 46/26, B01D 46/42

(54) **Control means for use in an air filtering arrangement**
Regeleinrichtung für eine Luftfilterungsvorrichtung
Dispositif de commande pour un dispositif de filtre à air

(43) Date of publication of application: 17.06.1992
(73) Proprietor: NEW HOLLAND BELGIUM N.V., B-8210 Zedelgem (BE)
(72) Inventor: Vergote, Geert R.J., B-8870 Izegem (BE); Witdoek, Daniel C., B-8830 Hooglede (BE)
(74) Representative: Vandenbroucke, Alberic

(56) References cited:
- DE-C- 453 597
- SOVIETS INVENTIONS ILLUSTRATED, Section P/Q, week C49, 21-01-1981; Derwent Publications Ltd., London GB & SU-A-729098 (GRAIN HARVEST MACH) 28-04-1980
- PATENT ABSTRACTS OF JAPAN vol. 8, no. 12 (M-269)(1449) 19 January 1984, & JP-A-58 174115 (NISSAN JIDOSHA) 13 October 1983
- PATENT ABSTRACTS OF JAPAN vol. 9, no. 202 (M-405)(1925) 20 August 1985, & JP-A-60 64139 (MATSUSHITA DENKI SANGYO) 12 April 1985

## Description

This invention relates to an air filtering arrangement which can generally be applied to many different devices which have to operate in an atmosphere which besides dry foreign matter, such as dust, chaff, short straw particles, etc., also contains damp and gluey particles and in which air from this athmosphere has to pass through relatively small openings in an element of the filtering arrangement to hold back this foreign matter on the one hand, but whereby there is a danger of the openings becoming blocked if no special precautions are taken on the other hand. Such an air filtering arrangement can, for example, be used with cooling devices for combustion engines or hydraulic equipment.

One particular application of the present invention is that of harvesting machines, such as combine harvesters, since these machines, when harvesting e.g. wheat or barley, normally work in a very dusty atmosphere as they can only harvest efficiently when the whole crop is ripe and dry, whereby, during operation, a considerable amount of dust, chaff and short straw particles are displaced in the vicinity of the machine. Harvesting other crops however, especially corn, requires only the ears of corn to be ripe and dry, while the cornstalks still may stand green and succulent as they usually are not processed through the harvesting machine but instead are comminuted thereby and left in the field. In chopping the cornstalks, sap thereof is beaten out generating clouds of damp, sticky particles. Occasionally, in addition, the ears of corn are infested e.g. by fungous diseases, resulting in a gluey powder to be spread into the air when stripping said ears from the cornstalks.

Whilst the use of a filter element prevents all this foreign matter in the atmosphere around the harvesting machine from reaching the device being cooled, for example the radiator through which the coolant for a combustion engine flows, it is necessary to prevent that same foreign matter blocking the filter element itself and thereby interrupting the flow of air to the cooling device and causing overheating.

It is known from EP-A-0.269.765 to remove foreign matter from a rotary filter element by relying partially on gravity and centrifugal forces. In the arrangement disclosed, the filter element is rotatably mounted and on the side thereof opposite to that through which air enters the filter element, there is provided a stationary means such as a plate, which serves to blank off a given area of the filter element as the latter rotates. Thus, any foreign matter collected on the area blanked off by the plate at any given instant is no longer held by the flow of air through the filter element and can thus fall free of the latter under gravity and centrigugal forces. In order to discharge the dislodged foreign matter at a location remote from the filter element, a duct is provided exteriorly thereof which is open in the region of the blanking off plate. The fan, operable to draw air through the filter element, generates a flow of pressurized air in said duct by virtue of the latter having its inlet opening at the pressure side of the fan. Any foreign matter falling free from the filter element in the predetermined region is captured by the pressurized air flow and is discharged at a remote location from the filter element.

Whilst a rotary air filter of the type described above has been found satisfactory in conditions where only dry foreign matter is retained on the filter surface exclusively by the flow of air passing through the filter element, it also has been experienced that this arrangement is unable to remove damp and gluey particles which firmly stick to the filter element.

This problem partially has been overcome by another air filter, disclosed in DE-B-453.597, which is similar to that of EP-A-0.269.765 to the extent that blanking off plates are employed for allowing dry foreign matter to fall free from the outer surface of the filter element. However, in this arrangement additional brush elements are operable to wipe off said outer surface for removing any particles which might stick too firmly thereto.

Yet, a serious drawback inherent to DE-B-453.597 results from the fact that the brush elements are in constant engagement with and are constantly moved over the outer surface of the filter element during operation of the filter arrangement, causing the softest parts, in casu the brush elements, to wear rapidly whereby the lifetime thereof is below the acceptable. Moreover, besides the noise already produced by the fan of the filter arrangement, the rotating brush elements are a source of additional noise pollution. This is particularly true because the brush elements are mounted exteriorly of the filter element, i.e. in the free atmosphere. In the same respect, the brush elements are continuously exposed to all sorts of foreign matter, contained in the surrounding air, thereby running the risk of accumulating dirt onto their surface. Finally, driving the brush elements at all times is power consuming.

In SU-A-729.098 a more durable brush means is provided in as much as on the one hand the brush is intermittently rotated over the filter surface and on the other hand the filter itself is a stationary element. However, due to the fact that the brush means are urged in constant engagement with the filter surface, the bristles of the brush in time become deformed whereby the cleaning characteristics of the brush are diminished.

It is therefore the objective of the present invention to overcome the aforedescribed drawbacks by providing a filter element cleaning means which is durable in construction, carefree of maintenance and still effective in use.

According to the present invention, there is provided an air filtering arrangement comprising :
- a perforate filter element;
- a fan operable to urge air, which is contaminated with foreign matter, through the filter element; the arrangement being such that the filter element is operable to restrain said foreign matter as said air passes through the perforations thereof; and
- filter element cleaning means comprising rotatable brush means for releasing foreign matter from the filter element; and
   which is characterized in that :
- the brush means are movable from an inoperative position out of engagement with the filter element to an operative position engaging the filter element; and
- control means are provided for intermittently moving the brush means in and out of engagement with the filter element.

In a preferred embodiment, the fan is operable to draw air through the perforate filter element which is generally cylindrical in shape and is rotatably mounted. Blanking off means are provided within the filter element for blanking off the perforations thereof over a predetermined region so as to obstruct the passage therethrough of air to be filtered whereby foreign matter collected on the outer surface of the perforate filter element falls free therefrom. The brush means are positioned adjacent the blanking off means equally at the inner side of the filter element. The brush means are mounted on a pivotable structure of which the position is controlled by a low voltage solenoid.

Upon energizing the solenoid, the brush means are urged against the perforate filter element for cleaning the perforations thereof. In a very simple embodiment, the operation of the solenoid is manually controlled. Preferably however, the solenoid is energized automatically by means of an operative connection to a control mechanism not related to the air filtering arrangement but which is actuated at regular intervals, thereby also initializing the operation of the brush means at regular intervals. In order to retract the brush means from their operative position, a timer mechanism is operable to de-energize the solenoid after a predetermined lapse of time following the actuation thereof.

An air filtering arrangement in accordance with the present invention will now be described, by way of example, with reference to the accompanying drawings, in which :
Figure 1 is a schematic side view of a combine harvester having an air filtering arrangement in accordance with the present invention,
Figure 2 is a sectional view of the cooling system of the combine harvester of Figure 1, and
Figure 3 is a front view, partially in section, of Figure 2, i.e. in the direction of arrow III of Figure 2.

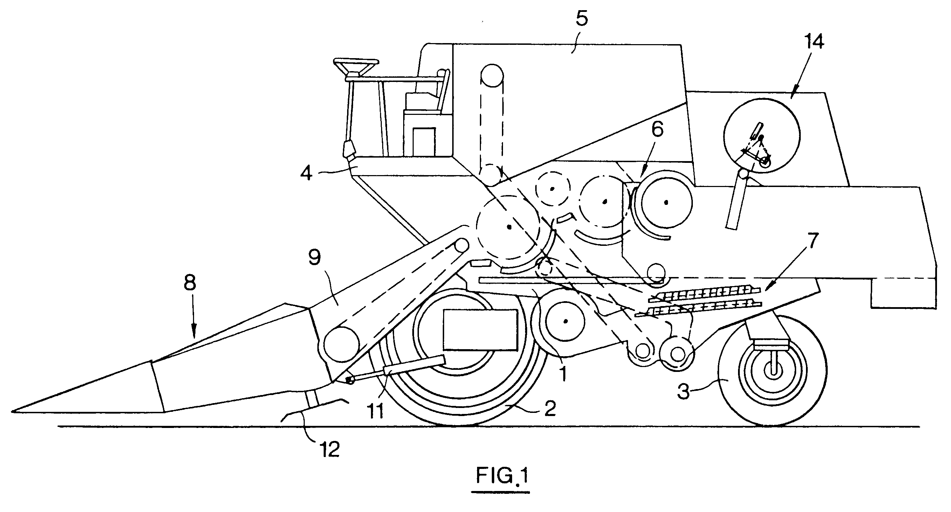

Referring first to Figure 1, the combine harvester on which the air filtering arrangement of the present invention is applied, is of generally known form and comprises a main chassis or frame 1 supported on a front pair of drive wheels 2 and a rear pair of steerable wheels 3. Supported on the main chassis 2 are an operator's platform 4, a grain tank 5, a threshing and separating mechanism indicated generally at 6, a grain cleaning mechanism indicated generally at 7, and an engine (not shown). A corn header 8 and elevator housing 9 extend forwardly of the main chassis 1 and the header is pivotably secured to the chassis for generally vertical movement which is controlled by extensible hydraulic cylinders 11.

As the combine harvester is propelled forwardly over a field with standing row crop, such as corn, the corn header 8 separates the ears of corn from the corn stalks and the former are conveyed to the elevator housing 9 which supplies them to the threshing and separating mechanism 6 for further processing. The corn stalks, stripped from their ears, are comminuted by a cutter device 12 provided underneath the corn header 8 and are left on the field.

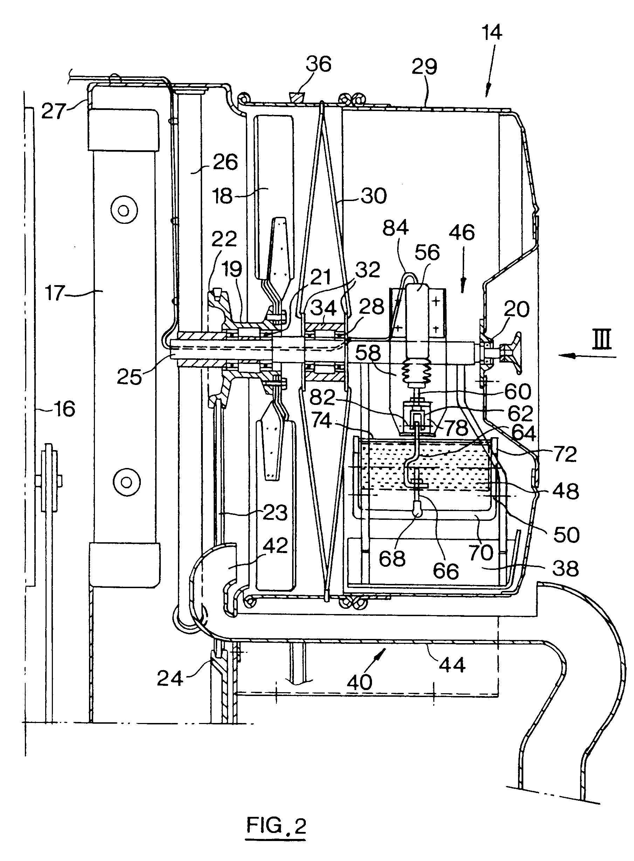

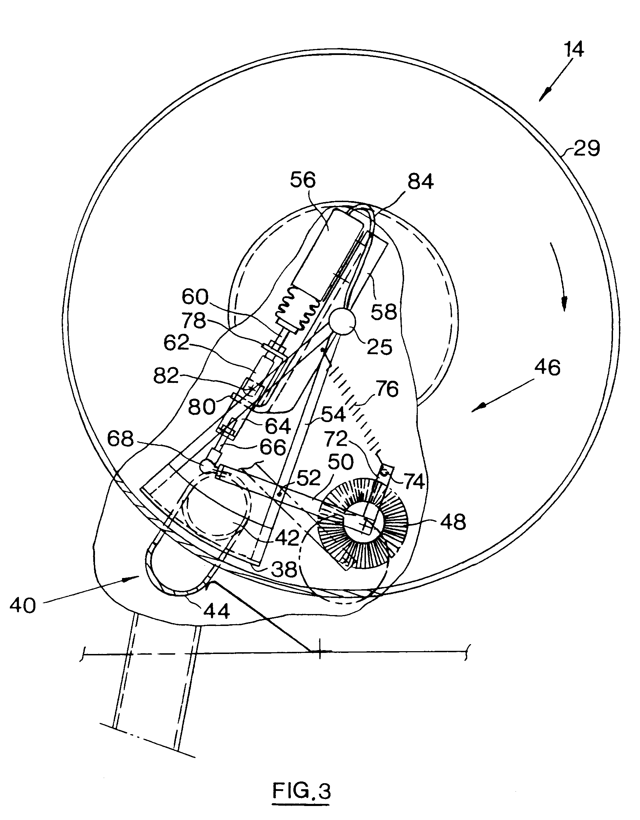

The combine harvester further comprises a rotary air filter or screen indicated generally at 14 and illustrated in greater detail in Figures 2 and 3 of the drawings. Referring now to Figures 2 and 3, the rotary air filter 14 forms part of a cooling system for the internal combustion engine of the combine harvester of which only the engine block 16 is illustrated schematically in Figure 2. The cooling system comprises a radiator 17 which is disposed with the engine block 16 at one side thereof and with a cooling fan 18 at the opposite side thereof. The cooling fan 18 is mounted on one end of a collar 19 with the other end of the collar 19 being provided with a pulley 22 which is driven by a belt 23 from a further pulley 24 in order to impart rotational drive to the cooling fan 18. To this end the collar 19 is mounted for rotation, via bearings 21, on a stationary shaft 25 which itself is supported via a support frame 26 provided in a radiator housing 27. The rotary air screen of filter 14 is mounted for rotation on said shaft 25 via bearings 20 and 28 and comprises a filter element 29 in the form of a cylinder which is open at one end facing the radiator 17 and which is closed at the opposite end. The fan 18 is mounted within the cylindrical filter element 29 adjacent its open end. The filter element 29 is imperforate at its closed end but perforate around its periphery for at least a portion of its axial length. Spokes 30, connected to flanges 32 of a hub 34, are operable to rotatably support the filter element 29 on the stationary shaft 25. Rotational drive of the filter element 29 is obtained by a belt 36 engaging the cylindrical surface thereof, thereby rotating the filter 29 at a rotational speed in the range of 200 RPM for example.

A stationary blanking off plate 38 is provided within the filter element 29 on the aforementioned shaft 25 in a manner so as to be closely adjacent a region of the perforate periphery of the filter element 29. It will be seen from Figure 3 that, in a preferred embodiment, this plate 38 extends over an arc of approximatley 30°, thus preventing cooling air from flowing through the filter element 29 over that arc at the perforate periphery thereof. Accordingly, any dust, short particles of leaves or other foreign matter collected on the outer surface of the air filter 29 at that blanked off portion in use of the air filtering arrangement tend to fall loose of the filter element due to gravity forces and eventually also centrifugal forces whereafter this foreign matter can readily be removed. To this end, a pneumatic foreign matter evacuation system or "blow-off" system is provided. This system comprises duct means 40 which is curved so that the open end 42 thereof is directed towards, and positioned adjacent, the pressure side of the cooling fan 18, whereby the latter provides a source of pressurized air which flows through the duct 40. A portion 44 of the duct means 40 extends closely beneath the filter element 29 and is open at its top in the region of the blanking off plate 38. In use, foreign matter that has accumulated on the perforate surface of the filter element 29 and that tends to fall loose beneath the blanking off plate 38 in a manner as already described, is picked up by the localized pressurized air flow and is discharged thereby at a remote location from the rotary air screen. For more details on this blow-off system, reference is made to EP-A-0.269.765, already mentioned.

It has been experienced however that under certain adverse operating conditions of the combine harvester, foreign matter not only tends to accumulate on the outer periphery of the perforate surface of the air screen 29, but moreover also tends to creep into the perforations provided therein, as such forming bridges therein and ultimately closing off the perforations completely. As a result, the air screen 29 starts to choke up whereby the cooling efficiency of the combine harvester engine is greatly reduced. The adverse operating conditions referred to hereabove are likely to occur when harvesting corn of which the ears are infested e.g. by fungous disease, which leaves a black, sticky powder on the husk. During harvesting operation, when the ears are stripped from the corn stalks, a large amount of this powder becomes airborne, forming clouds of particles enveloping the combine harvester.

It will be appreciated that, since the fan 18 of the engine cooling system draws in air from the immediate surroundings of the harvester, this cooling air inevitably is contaminated with said sticky particles. As the latter are smaller in size than the perforations provided in the filter element 29, lots of these particles are not retained by the outer surface of the filter 29 but are instead carried along with the cooling air into the perforations. Due to their gluey characteristics, and as a result of collisions against the side walls of the perforations, those particles tend to adhere thereto, whereby the free passage of air through the perforations is reduced. In a further stage, particles start to stick to each other, after a while, fill up the perforations completely to the extent that air is prevented from flowing therethrough.

The above depicted phenomenon also happens to occur when corn is harvested of which the ears are ripe and dry while the corn stalks are still unripe and green. In chopping those cornstalks with the cutter device 12 underneath the corn header 8, sap of the stalks is smashed thereout by the vigorous action of the cutter knives thereon, forming a haze of liquid particles through which the combine harvester is driving. Said particles, by their nature, equally are rather gluey and as such also effect a rapid clogging of the air filter 29 when air thereby polluted is drawn through the perforations of said filter 29.

It is evident that a clogged air filter is highly ineffective and undesirable in that it can cause overheating of the combine harvester engine. Precautions thereagainst, such as the already described blanking off plate 38 or the blow-off system 40, have proven to provide minimal effect when the obstruction of the air filter 29 is concentrated inside the perforations and not on the outer surface of the filter. Indeed, the advantageous effect of the blanking off plate 38 is mainly based on the gravity forces succeeding to loosen foreign matter collected on the outer surface of the air filter 29. However, gravity forces alone are not sufficiently strong to extract the sticky particles from the perforations. Also the blow-off system 40 is unable to clear the filter element 29, as the flow of pressurized air generated in the duct 40 is oriented parallel to the outer surface of the filter 29, thus having no effect whatsoever on the hidden obstructions inside the perforations.

A solution to this problem is provided by a filter element cleaning means 46 comprising a brush 48, rotatably mounted parallel to the perforate portion of the filter element 29 and at the inner side thereof, when seen in the direction of normal air flow therethrough. A pair of lever arms 50, hingeably connected at 52 to the retaining members 54 of the blanking off plate 38, is operable to support the brush 48 either in an inoperative position as shown in full lines in Figure 3 or in an operative position shown in dashed lines in the same Figure. A solenoid 56 is attached to a mounting member 58, in turn fixedly secured to the stationary shaft 25. The plunger side of the solenoid 56 is provided with a threaded rod 60 which adjustably receives a bifurcated connector 62, the open end of which hingeably holds a hook-shaped member 64. A further threaded rod 66 is adjustably connected at one side to the hook-shaped member 64, while the other side is attached, via a ball-and-socket joint 68, to a cross member 70 which links the arms 50 to each other. At the brush supporting end of the arms 50, two upright brackets 72 are welded thereto, holding inbetween a rod 74 which extends parallel to the brush 48. A tension spring 76 is provided between an anchor point on the mounting member 58 and the rod 74, at a portion halfway thereof.

When the solenoid 56 is not energized, the spring 76 is able to swivel the brush 48 on its supporting arms 50 around their pivots 52 to its inoperative position clear from the perforate portion of the filter element 29. Any further movement away from the filter 29 is prevented by an angled member 78, firmly connected to the rod 60 of the solenoid 56 and which abuts against an extending flange 80 of the mounting member 58.

Upon energizing the solenoid 56 by means to be described furtheron, the threated rod 60 is retracted to some degree into the solenoid body in a straight line. Hence also the bifurcated connector 62 is subjected to this linear movement, resulting in all intermediate members 64, 66 and 68 to swivel the levers 50 in a clockwise direction as seen in Figure 3, whereby the brush 48 is urged into its operative position against the filter element 29. It readily will be appreciated that the hook-shaped member 64 and the threaded rod 66 are not moved in a linear path since the levers 50 are pivoted around their fulcrum 52. To intercept this discrepancy in movements, the member 64 is hingeably attached at the bifurcated connector 62 by a hinge 82 which extends parallel to the hinge axis 52 of the levers 50.

In order to ensure that the connecting members between the solenoid 56 and the levers 50 are always assembled in a correct manner i.e. with the bifurcated connector 62 always facing in a same direction having its hinge 82 parallel to the hinge axis 52, an elongated recess is provided in the extending flange 80 of the mounting members 58. As such, the hook-shaped member 64 can only enter the recess with its smallest side up front, as seen in Figure 2, and thus consequently the bifurcated connector 62 must be positioned correctly to be able to make the connection.

As the filter element 29 is constantly rotating during operation of the combine harvester, rotational power is transmitted to the brush 48 in contact therewith, which starts spinning at an elevated RPM, considering the ratio of the diameters of the filter screen 29 on the one hand and the brush 48 on the other hand.

The bristles of the brush 48 are of a size able to pierce through the perforations in de filter element 29 without running the risk of getting stuck therein. In piercing through, the foreign particles accumulated in the perforations are repelled in the direction opposite to the direction in which they entered. As the blanking off plate 38 is positioned immediately behind the brush 48 when seen in the direction of rotation of the screen 29, the repelled particles are not given a chance to be sucked in again by the fan 18, but instead are received in the blow-off duct 44 and evacuated from the vicinity of the screen 29 and, provided the brush 48 is constructed according to some specific requirements, only a few revolutions of the screen 29 are imperative to clean the same.

What the construction of the brush 48 is concerned, lightweight synthetic materials are applied to keep the weight as low as possible for reasons to avoid slip of the screen 29 on the brush 48 which would lead to excessive wear of the brush bristles. In the same connection, low friction bearings aligned with respect to each other are used to freely rotatably support the brush 48 on the lever arms 50. The bristles of the brush 48 should meet two almost contradicting requirements : on the one hand being wear-resistant and strong, but on the other hand being very flexible. In a preferred embodiment the bristles are formed by nylon fibres which are attached to a hollow plastic core. To improve the cleaning efficiency, the amount of bristles must be chosen in relation to the amount of perforations instantaneously presented to the brush 48. Indeed, if the outer surface of the brush 48 is too dense, then the brush will act as a near rigid structure and the bristles, which have to enter the perforations, will experience great difficulty to do so. In the opposite case however, if too few bristles are provided, the brush 48 will be too flexible and all the bristles will bend, without entering the perforations.

As already mentioned, the brush 48 need not to be in constant engagement with the filter element 29 for satisfactorily cleaning the same. Therefore, in order to prolong the lifetime of the brush 48 and to reduce power consumption of the rotary air filter drive, provisions are made for only periodically energizing the solenoid 56 and thus subjecting the filter 29 to an intermittent cleaning action. To this end, the solenoid 56 is connected to a low voltage electric source (not shown) by means of wires 84, which are suitably guided through a central bore in the shaft 25 for not impeding the operation of rotating elements thereon. Control means (not shown) are included in the electric circuit comprising the electric source and the solenoid 56; the control means being operable to intermittently energize and deenergize the solenoid 56 for moving the brush 48 respectively in and out of engagement with the filter element 29.

In a very simple embodiment, the control means may take the form of an electric switch, mounted within reach of the operator on the platform 4. Although such a system undeniably has the advantage of being cheap, it nevertheless suffers from the disadvantage that the operator is likely to forget to manually switch the filter element cleaning means 46 on or off at timely intervals. In the former case he will be driving on for longer periods without noticing that the filter element 29 gradually becomes clogged, resulting in the engine starting to overheat. In the latter case however, the brush 48 will wear faster, reducing the lifetime thereof.

To avoid the foregoing from happening, a preferred embodiment is employed wherein the control means are automatically actuated at regular intervals, without any determined action from the part of the operator being required. Said control means comprises an electric switch (not shown), provided underneath the operator's platform 4, which is operatively coupled to the engagement lever (equally not shown) of the graintank unloading tube. A timer mechanism (not shown) is also integrated in the electric circuit of the solenoid 56.

In operation, the graintank 5 is gradually filling while the combine harvester is driven over the field. To unload the graintank 5 through the unloading tube into a grain trailer or truck, the operator manipulates the lever to engage the unloading tube drive. By the same action, the electric switch underneath the platform 4 is actuated, whereby electric current is provided to the solenoid 56 and consequently the brush 48 is brought into engagement with the filter 29 for starting its cleaning operation. The timer mechanism ensures that, following the energizing of the solenoid 56, the current supply to this solenoid 56 is interrupted after a predetermined period of time and irrespective of the position of the lever for engaging the unloading tube drive. As during normal operation, the graintank regularly has to be emptied (i.e. in the order of each half hour for example), not enough time is provided to the flow of polluted cooling air to clog the filter screen 29 beyond an acceptable level between two successive cleaning operations. As such, an optimal effect of the cooling system is guaranteed.

The timer mechanism referred to hereabove preferably takes the form of an electronic circuit of which the operating time can be adjusted according to the needs. In this respect, it has been experienced that, in most conditions, the timer mechanism may cut the current to the solenoid 56, thereby disengaging the brush 48 from the screen 29, already after a few seconds, since, as mentioned before, only a few revolutions of the screen 29 with the brush 48 in engagement are needed to remove the foreign particles from the perforations therein. All this implies that, during a full harvesting day, the brush 48 becomes operational for a reduced period of time only which nevertheless is sufficient to safeguard the free flow of cooling air through the perforated screen 29. By the same token, the lifetime of the brush 48 is increased considerably.

It will be appreciated by a person skilled in the art that the control means for initiating the operation of the brush 48 operatively may be coupled to another control mechanism besides the graintank unloading device, provided said control mechanism is actuated at regular intervals during the harvesting operation. One further example of such a control mechanism is found in the header height adjustment lever (not shown) as indeed said lever is manipulated frequently for raising the header when the combine harvester starts driving on the headlands.

It also will be appreciated that besides the measures already taken, still further steps may be taken to prolong the lifetime of the brush 48. One such step consists of ensuring that the inner surface of the perforate screen 29 against which the brush 48 is rubbing, is made as smooth as possible. This is accomplished by taking account of the punch direction during manufacture of the perforations in the screen 29. More specifically, the screen 29 should be assembled such that said punch direction is oriented from the inside of the screen 29 to the outside thereof, so that any serrated bulges, resulting from the punch operation, are located at the outer surface of the screen 29.

In an alternative embodiment, the blow-off duct 40 may be omitted without seriously decreasing the cleaning efficiency of the brush 48. In this event, evacuation of the expelled particles from the filter 29 solely depends on gravity forces experienced underneath the blanking off plate 38. Also the latter may be left out from the filter arrangement, although this would demand much longer engagement periods of the brush 48 to keep the filter 29 clean, as particles expelled from the perforations are more likely to be sucked in again immediately behind the brush 48, as seen in the direction of rotation of the filter 29.

In case the friction between the brush 48 and the surface of the filter 29 is kept sufficiently low during the cleaning operation, then the spokes 30, which support the filter 29, advantageously may be substituted by a set of turbine blades; these blades being acted upon by the flow of cooling air drawn through the filter by the cooling fan 18, thus rotating the filter at a relatively low rotational speed.

## Claims

1. An air filtering arrangement comprising :
- a perforate filter element (29);
- a fan (18) operable to urge air, which is contaminated with foreign matter, through the filter element (29); the arrangement being such that the filter element (29) is operable to restrain said foreign matter as said air passes through the perforations thereof; and
- filter element cleaning means (46) comprising rotatable brush means (48) for releasing foreign matter from the filter element; and
characterized in that :
- the brush means (48) are movable from an inoperative position out of engagement with the filter element (29) to an operative position engaging the filter element (29); and
- control means (56, 84) are provided for intermittently moving the brush means (48) in and out of engagement with the filter element (29).

2. An air filtering arrangement according to claim 1 characterized in that the control means include :
- an electric circuit (84) comprising an electric power source;
- a solenoid (56) operatively coupled to the brush means (48) and integrated in said electric circuit (84); and
- switch means equally integrated in said electric circuit (84) and operable to control the operation of the solenoid (56).

3. An air filtering arrangement according to claim 2 characterized in that said switch means either are manually operable or are automatically operated by means of an operative connection to a further control means not related to the air filtering arrangement; said further control means being actuated at regular intervals thereby also controlling the operation of the brush means (48) as a result of said operative connection therebetween.

4. An air filtering arrangement according to claim 3 characterized in that the control means (56, 84) further also include timer means operable to de-energize the solenoid (56) after a predertermined lapse of time following the actuation thereof and during which the brush means (48) are in engagement with the filter element (29) to thereby move said brush means (48) to their inoperative position.

5. An air filtering arrangement according to any of the claims 2 to 4 characterized in that the brush means (48) are rotatably mounted on a pivotable structure (50, 70) operatively connected to the plunger side of the solenoid (56) by means of intermediate linkage means (60, 62, 65, 66 and 68); pivotal movement of said pivotable structure (50, 70) together with the brush means (48) thereon towards the operative position being effected by energizing the solenoid (56) whereas spring means (70) are operable to retract the brush means (48) towards the inoperative position upon deactivation of the solenoid.

6. An air filtering arrangement according to any of the preceding claims wherein said arrangement further comprises drive means (36/.) for, in use, varying the relative position of the filter element (29) with respect to the brush means (48) such that other sections of the filter element successively are exposed to the brush means (48); and
characterized in that :
- the fan is operable to urge air through the filter element (29) in a given direction; and
- the brush means (48) are positioned at the side of the filter element (29) which faces in said given direction and are operable to pierce through said perforations thereof in the opposite direction.

7. An air filtering arrangement according to any of the preceding claims characterized in that the fan (18) and the brush means (48) are positioned at the same side of the filter element (29); the fan (18) being operable to draw air therethrough.

8. An air filtering arrangement according to claim 7 characterized in that :
- blanking off means (38) are provided closely adjacent the filter element (29) at the side thereof facing in the direction of the fan (18) for blanking off the perforations of the filter element (29) over a predetermined region so as to obstruct the passage therethrough of air to be filtered, and
- the brush means (48) are positioned closely adjacent the blanking off means (38).

9. An air filtering arrangement according to claim 8 characterized in that :
- the filter element (29) is rotatably driven by the drive means (36/.);
- the blanking off means (38) are stationary and, in use, blank off successive sections of the filter element (29); and
- the brush means (48), when in the operative position, are stationary at a position upstream of the blanking off means (38) when seen in the direction of rotation of the filter element (29).

10. An air filtering arrangement according to claim 8 or 9 characterized in that :
- the filter element (29) is generally cylindrical in shape and is perforate around its periphery for at least a portion of its axial length;
- the fan (18) is operable to draw air to be filtered from outside the filter element (29) through said filter element (29) to the inside thereof ;
- the blanking off means (38) are provided stationarily within the filter element and extend over an arc of, and closely adjacent the perforate periphery of the filter element (29); and
- the brush means (48) are generally shaped as a cylinder, the diameter of which is smaller than the diameter of the filter element (29) and which extends generally parallel to the axis of said filter element (29) over the perforate portion thereof.

11. An air filtering arrangement according to claim 10 characterized in that the brush means (48) comprise a hollow core provided with exteriorly extending bristles, dimensioned such that, during cleaning engagement, the bristles are operable to penetrate into the perforations of the filter section exposed to the brush means (48) thereby expelling foreign matter from said perforations in a direction opposite to the direction of entrance of said foreign matter.

12. An air filtering arrangement according to claim 10 or 11 when appended either directly or indirectly to claim 5 characterized in that the brush means (48) are freely rotatably mounted on the pivotable structure (50, 70) and are rotatably driven by the filter element (29) when in engagement therewith.

13. An air filtering arrangement according to any of the claims 8 to 12 characterized in that a filter element cleaning air blast is oriented generally parallel to and closely adjacent a section of the filter element (29) at the side thereof facing away from and in the region of the blanking off means (38); the cleaning air blast being operable to remove foreign matter from said section in said parallel direction and to discharge the removed foreign matter remote from the filter element (29).

14. An air filtering arrangement according to claim 13 characterized in that duct means (44) are provided in the vicinity of the filter element (29) and which are open towards said filter element (29) in the region of the blanking off means (38); the duct means being operable to channel the cleaning air blast in said generally parallel direction relative to and closely adjacent said section of the filter element (29) and the arrangement being such that foreign matter, expelled from the filter perforations by the cleaning action of the brush means (48), is blanked off by the blanking off means (38) from the air drawn into the filter element (29) by the fan (18) and is captured by the cleaning air blast in the duct means (44) through the open portion thereof for being discharged at a location remote from the filter element.

15. An air filtering arrangement according to any of the claims 10 to 14 characterized in that the drive means for the filter element (29) comprises either a belt (36) in driving engagement with the cylindrical surface of the filter element (29) or turbine blades coupled to said filter element (29) whereby, in use, the filter element (29) is driven by the flow of air therethrough as drawn by the fan (18).

16. An air filtering arrangement according to any of the preceding claims characterized in that the filtering arrangement (14) is provided in a harvesting machine.

17. An air filtering arrangement according to claim 16 when appended either directly or indirectly to claim 3, characterized in that :
- the harvesting machine comprises a grain tank and grain tank unloading means; and
- said further control means is operable to control the operation of the grain tank unloading means for unloading the grain tank at regular intervals.

## Patentansprüche

1. Luftfilterungsanordnung mit:
- einem perforierten Filterelement (29),
- einem Gebläse (18), das betreibbar ist, um Luft, die mit Fremdstoffen verunreinigt ist, durch das Filterelement (29) zu drücken, wobei die Anordnung derart ist, daß das Filterelement (29) die Fremdstoffe festhält, während die Luft durch die Perforationen des Filterelementes hindurchströmt, und
- einer Filterelement-Reinigungseinrichtung (46), die drehbare Bürsteneinrichtungen (48) zum Ablösen von Fremdstoffen von dem Filterelement aufweist,
dadurch gekennzeichnet daß:
- die Bürsteneinrichtungen (48) von einer Ruhestellung außer Eingriff mit dem Filterelement (29) in eine Betriebsstellung bewegbar sind, in der sie mit dem Filterelement (29) in Eingriff stehen, und
- Steuereinrichtungen (56, 84) vorgesehen sind, um die Bürsteneinrichtungen (48) intermittierend in und außer Eingriff mit dem Filterelement (29) zu bewegen.

2. Luftfilterungsanordnung nach Anspruch 1, dadurch gekennzeichnet, daß die Steuereinrichtungen folgende Teile einschließen:
- eine elektrische Schaltung mit einer elektrischen Leistungsquelle,
- eine Magnetspule (56), die betriebsmäßig mit den Bürsteneinrichtungen (48) verbunden und in die elektrische Schaltung (84) integriert ist, und
- Schaltereinrichtungen, die ebenfalls in die elektrische Schaltung (84) integriert sind und zur Steuerung des Betriebs der Magnetspule (56) betätigbar sind.

3. Luftfilterungsanordnung nach Anspruch 2,
dadurch gekennzeichnet, daß die Schaltereinrichtungen entweder manuell betätigbar sind oder automatisch mit Hilfe einer Betriebsverbindung mit einer weiteren Steuereinrichtung betätigt werden, die nicht mit der Luftfilterungsanordnung in Beziehung steht, wobei die weiteren Steuereinrichtungen unter regelmäßigen Intervallen betätigt werden und damit außerdem die Betriebsweise der Bürsteneinrichtungen (48) als Ergebnis dieser Betriebsverbindung zwischen diesen Teilen steuern.

4. Luftfilterungsanordnung nach Anspruch 3,
dadurch gekennzeichnet, daß die Steuereinrichtungen (56, 84) weiterhin auch Zeitgebereinrichtungen einschließen, die zum Abschalten der Magnetsspule (56) nach Ablauf einer vorgegebenen Zeit, die auf deren Einschalten folgt und während der die Bürsteneinrichtungen (48) in Eingriff mit dem Filterelement (29) stehen, betätigbar sind, um auf diese Weise die Bürsteneinrichtungen in ihre Ruhestellung zu bewegen.

5. Luftfilterungsanordnung nach einem der Ansprüche 2 - 4, dadurch gekennzeichnet, daß die Bürsteneinrichtungen (48) drehbar auf einer schwenkbaren Struktur (50, 70) befestigt sind, die betriebsmäßig mit der Betätigungsstangenseite der Magnetspule (56) über zwischenliegende Gestängeeinrichtungen (60, 62, 65, 66 und 68) verbunden ist, wobei eine Schwenkbewegung der schwenkbaren Struktur (50, 70) zusammen mit den daran befestigten Bürsteneinrichtungen (48) in Richtung auf die Betriebsstellung durch das Einschalten der Magnetspule (56) bewirkt wird, während Federelemente (70) zum Zurückziehen der Bürsteneinrichtungen (489 in die Ruhestellung bei Abschalten der Magnetspule betätigbar sind.

6. Luftfilterungsanordnung nach einem der vorhergehenden Ansprüche, bei der die Anordnung weiterhin Antriebseinrichtungen (36/.) zur Änderung der Relativstellung des Filterelementes (29) bezüglich der Bürsteneinrichtungen (48) im Betrieb derart umfaßt, daß andere Abschnitte des Filterelementes aufeinanderfolgend den Bürsteneinrichtungen (48) ausgesetzt sind,
dadurch gekennzeichnet, daß:
- das Gebläse zum Hindurchdrücken von Luft durch das Filterelement (29) in einer vorgegebenen Richtung betreibbar ist, und
- die Bürsteneinrichtungen (48) auf der Seite des Filterelementes (29) angeordnet sind, die in die vorgegebene Richtung zeigt und betätigbar sind, um durch die Perforationen des Filterelementes in der entgegengesetzten Richtung hindurchzustechen.

7. Luftfilterungsanordnung nach einem der vorhergehenden Ansprüche, dadurch gekennzeichnet, daß das Gebläse (18) und die Bürsteneinrichtungen (48) auf der gleichen Seite des Filterelementes (29) angeordnet sind und das Gebläse (18) zum Hindurchsaugen von Luft durch das Filterelement ausgebildet ist.

8. Luftfilterungsanordnung nach Anspruch 7,
dadurch gekennzeichnet, daß:
- Abdeckeinrichtungen (38) eng benachbart zu dem Filterelement (29) auf dessen in Richtung auf das Gebläse (18) zeigender Seite angeordnet sind, um die Perforationen des Filterelementes (29) über einen vorgegebenen Bereich hinweg abzudecken, um auf diese Weise den Durchgang von zu filternder Luft durch diesen Bereich zu verhindern, und
- die Bürsteneinrichtungen (48) eng benachbart zu den Abdeckeinrichtungen (38) angeordnet sind.

9. Luftfilterungsanordnung nach Anspruch 8,
dadurch gekennzeichnet, daß:
- das Filterelement (29) durch die Antriebseinrichtungen (36/.) drehbar angetrieben ist,
- die Abdeckeinrichtungen (38) stationär sind und im Betrieb aufeinanderfolgende Abschnitte des Filterelementes (29) abdecken, und
- die Bürsteneinrichtungen (48) in der Betriebsstellung stationär bei Betrachtung in Drehrichtung des Filterelementes (29) an einer Position vor den Abdeckeinrichtungen (38) angeordnet sind.

10. Luftfilterungsanordnung nach Anspruch 8 oder 9,
dadurch gekennzeichnet, daß:
- das Filterelement (29) eine allgemein zylindrische Form aufweist und um seinen Umfang über zumindestens einen Teil seiner axialen Länge perforiert ist,
- das Gebläse (18) zum Ansaugen von zu filternder Luft von der Außenseite des Filterelementes (29) durch das Filterelement (29) hindurch zu dessen Innenseite hin betreibbar ist,
- die Abdeckeinrichtungen (38) stationär innerhalb des Filterelementes angeordnet sind und sich über einen Bogen des perforierten Umfanges des Filterelementes (29) und eng benachbart hierzu erstrecken, und
- die Bürsteneinrichtungen allgemein in Form eines Zylinders geformt sind, dessen Durchmesser kleiner als der Durchmesser des Filterelementes (29) ist und der sich allgemein parallel zur Achse des Filterelementes (29) über dessen perforierten Teil erstreckt.

11. Luftfilterungsanordnung nach Anspruch 10,
dadurch gekennzeichnet, daß die Bürsteneinrichtungen (48) einen hohlen Kern umfassen, der mit sich nach außen erstreckenden Borsten versehen ist, die derart bemessen sind, daß während des Reinigungseingriffes die Bürsten zum Eindringen in die Perforationen des Filterabschnittes betreibbar sind, der den Bürsteneinrichtungen (48) ausgesetzt ist, wodurch Fremdstoffe aus den Perforationen in einer Richtung entgegengesetzt zur Eintrittsrichtung der Fremdstoffe ausgetrieben werden.

12. Luftfilterungsanordnung nach Anspruch 10 oder 11 unter direkter oder indirekter Rückbeziehung auf Anspruch 5, dadurch gekennzeichnet, daß die Bürsteneinrichtungen (48) frei drehbar auf der schwenkbaren Struktur (50, 70) befestigt und durch das Filterelement (29) in Drehung angetrieben werden, wenn sie mit diesem in Eingriff stehen.

13. Luftfilterungsanordnung nach einem der Ansprüche 8 bis 12, dadurch gekennzeichnet, daß ein Filterelement-Reinigungsluftstrom allgemein parallel zu und eng benachbart zu einem Abschnitt des Filterelementes (29) an dessen von den Abdeckeinrichtungen (38) fort gerichteter Seite und in deren Bereich ausgerichtet ist, und daß der Reinigungsluftstrom zur Beseitigung von Fremdstoffen von diesem Abschnitt in der parallelen Richtung und zur Abgabe der entfernten Fremdstoffe an einer von dem Filterelement (29) entfernten Selle betreibbar ist.

14. Luftfilterungsanordnung nach Anspruch 13,
dadurch gekennzeichnet, daß Kanaleinrichtungen (44) in der Nähe des Filterelementes (29) vorgesehen sind, die in Richtung auf das Filterelement (29) in dem Bereich der Abdeckeinrichtungen (38) offen sind, daß die Kanaleinrichtungen zur Führung des Reinigungsluftstromes auf der allgemein parallelen Richtung relativ zu und eng benachbart zu dem Abschnitt des Filterelementes (29) betreibbar sind, und daß die Anordnung derart ist, daß Fremdstoffe, die durch die Reinigungswirkung der Bürsteneinrichtungen (48) aus den Filterperforationen ausgestoßen werden, von den Abdeckeinrichtungen (38) gegenüber der durch das Gebläse (18) in das Filterelement (29) eingesaugten Luft abgeschirmt werden und von dem Reinigungsluftstrom in den Kanaleinrichtungen (48) durch dessen offenen Teil hindurch aufgefangen werden, um an einer von dem Filterelement entfernten Stelle abgegeben zu werden.

15. Luftfilterungsanordnung nach einem der Ansprüche 10 bis 14, dadurch gekennzeichnet, daß die Antriebseinrichtungen für das Filterelement (29) entweder einen Riemen (36) in Antriebseingriff mit der zylindrischen Oberfläche des Filterelementes (29) oder Turbinenschaufeln umfassen, die mit dem Filterelement (29) gekoppelt sind, so daß im Betrieb das Filterelement (29) durch die Strömung der Luft angetrieben wird, die von dem Gebläse (18) durch das Filterelement hindurchgesaugt wird.

16. Luftfilterungsanordnung nach einem der vorhergehenden ansprüche,
dadurch gekennzeichnet, daß die Filterungsanordnung (14) in einer Erntemaschine angeordnet ist.

17. Luftfilterungsanordnung nach Anspruch 16 unter direkter oder indirekter Rückbeziehung auf Anspruch 3,
dadurch gekennzeichnet, daß:
- die Erntemaschine einen Körnertank und Körnertank-Entladeeinrichtungen aufweist, und
- die weitere Steuereinrichtung betätigbar ist, um die Betriebsweise der Körnertank-Entladeeinrichtung zum Entladen des Körnertankes unter regelmäßigen Intervallen zu steuern.

## Revendications

1. Dispositif de filtration d'air comportant :
- un élément formant filtre perforé (29);
- un ventilateur (18) apte à agir pour obliger de l'air contaminé par des corps étrangers à passer à travers l'élément formant filtre (29); le dispositif étant tel que l'élément formant filtre (29) est apte à agir pour retenir lesdits corps étrangers lorsque l'air passe à travers ses perforations; et
- des moyens de nettoyage d'élément formant filtre (46) comprenant un moyen formant balai rotatif (48) destiné à libérer les corps étrangers de l'élément formant filtre; et
caractérisé en ce que :
- le moyen formant balai (48) est mobile d'une position inactive dans laquelle il n'est pas en contact avec l'élément formant filtre (29) vers une position active en contact avec l'élément formant filtre (29); et
- des moyens de commande (56, 84) sont prévus pour déplacer d'une manière intermittente le moyen formant balai (48) afin de l'amener en contact avec l'élément formant filtre (29) et hors de contact vis-à-vis de celui-ci.

2. Dispositif de filtration d'air selon la revendication 1, caractérisé en ce que les moyens de commande comprennent :
- un circuit électrique (84) comportant une source d'énergie électrique;
- un solénoïde (56) relié d'une manière fonctionnelle au moyen formant balai (48) et intégré dans ledit circuit électrique (84); et
- un moyen commutateur également intégré dans ledit circuit électrique (84) et apte à agir pour commander le fonctionnement du solénoïde (56).

3. Dispositif de filtration d'air selon la revendication 2, caractérisé en ce que ledit moyen commutateur peut être actionné manuellement ou automatiquement à l'aide d'une connexion active avec d'autres moyens de commande sans relation avec le dispositif de filtration d'air; lesdits autres moyens de commande étant activés à intervalles réguliers pour ainsi commander également le fonctionnement du moyen formant balai (48) du fait de ladite connexion active prévue entre eux.

4. Dispositif de filtration d'air selon la revendication 3, caractérisé en ce que les moyens de commande (56, 84) comprennent, en outre, des moyens formant minuterie aptes à agir pour désexciter le solénoïde (56) au bout d'un laps de temps prédéterminé après que celui-ci a été activé et pendant lequel le moyen formant balai (48) est en contact avec l'élément formant filtre (29) pour ainsi déplacer le moyen formant balai (48) vers sa position inactive.

5. Dispositif de filtration d'air selon l'une quelconque des revendications 2 à 4, caractérisé en ce que le moyen formant balai (48) est monté mobile en rotation sur une structure pivotante (50, 70) reliée d'une manière fonctionnelle au coté piston du solénoïde (56) à l'aide de moyens formant tringlerie intermédiaire (60, 62, 65, 66 et 68); un mouvement de pivotement de ladite structure pivotante (50, 70) ainsi que du moyen formant balai (48) monté sur celle-ci en direction de la position active étant obtenu par une excitation du solénoïde (56), tandis qu'un moyen formant ressort (70) est apte à agir pour ramener le moyen formant balai (48) en direction de la position inactive lors d'une désexcitation du solénoïde.

6. Dispositif de filtration d'air selon l'une quelconque des revendications précédentes, dans lequel ledit dispositif comporte, en outre, des moyens d'entraînement (36/.) pour, en service, faire varier la position relative de l'élément formant filtre (29) par rapport au moyen formant balai (48) de façon que d'autres sections de l'élément formant filtre soient successivement exposées au moyen formant balai (48); et
caractérisé en ce que :
- le ventilateur est apte à agir pour obliger de l'air à passer à travers l'élément formant filtre (29) dans un sens donné; et
- le moyen formant balai (48) est positionné du côté de l'élément formant filtre (29) tourné dans ledit sens donné et est apte à agir pour passer à travers lesdites perforations de celui-ci dans le sens opposé.

7. Dispositif de filtration d'air selon l'une quelconque des revendications précédentes, caractérisé en ce que le ventilateur (18) et le moyen formant balai (48) sont positionnés du même côté de l'élément formant filtre (29); le ventilateur étant apte à agir pour aspirer de l'air à travers celui-ci.

8. Dispositif de filtration d'air selon la revendication 7, caractérisé en ce que :
- un moyen formant cache (38) est prévu tout près de l'élément formant filtre (29) du côté de celui-ci qui est tourné dans la direction du ventilateur (18) pour cacher les perforations de l'élément formant filtre (29) sur une zone prédéterminée de manière à empêcher le passage à travers celle-ci de l'air destiné à être filtré, et
- le moyen formant balai (48) est positionné tout près du moyen formant cache (38).

9. Dispositif de filtration d'air selon la revendication 8, caractérisé en ce que :
- l'élément formant filtre (29) est entraîné en rotation par les moyens d'entraînement (36/.);
- le moyen formant cache (38) est fixe et, en service, cache des sections successives de l'élément formant filtre (29); et
- le moyen formant balai (48) est, dans la position active, fixe au niveau d'une position située en amont du moyen formant cache (38), lorsqu'on le considère dans le sens de rotation de l'élément formant filtre (29).

10. Dispositif de filtration d'air selon la revendication 8 ou 9, caractérisé en ce que :
- l'élément formant filtre (29) a une configuration, dans l'ensemble, cylindrique et est perforé autour de sa périphérie sur une partie au moins de sa longueur axiale;
- le ventilateur (18) est apte à agir pour aspirer de l'air destiné à être filtré de l'extérieur vers l'intérieur de l'élément formant filtre (29) à travers celui-ci;
- le moyen formant cache (38) est prévu d'une manière fixe à l'intérieur de l'élément formant filtre et s'étend sur un arc de l'élément formant filtre (29) et tout près de la périphérie perforée de celui-ci; et
- le moyen formant balai (48) présente, dans l'ensemble, la configuration d'un cylindre dont le diamètre est inférieur au diamètre de l'élément formant filtre (29) et qui s'étend, d'une manière générale, parallèlement à l'axe dudit élément formant filtre (29) sur la partie perforée de celui-ci.

11. Dispositif de filtration d'air selon la revendication 10, caractérisé en ce que le moyen formant balai (48) comporte un noyau creux pourvu de poils s'étendant vers l'extérieur dimensionnés de façon à pouvoir, pendant un contact de nettoyage, pénétrer dans les perforations de la section du filtre exposée au moyen formant balai (48), pour ainsi expulser des corps étrangers hors desdites perforations dans une direction opposée à la direction dans laquelle ils sont entrés.

12. Dispositif de filtration d'air selon la revendication 10 ou 11, lorsque celles-ci sont directement ou indirectement dépendantes de la revendication 5, caractérisé en ce que le moyen formant balai (48) est monté pour pouvoir tourner librement sur la structure pivotante (50, 70) et entraîné en rotation par l'élément formant filtre (29) lorsqu'il est en contact avec celui-ci.

13. Dispositif de filtration d'air selon l'une quelconque des revendications 8 à 12, caractérisé en ce qu'un souffle d'air de nettoyage d'élément formant filtre est orienté, d'une manière générale, parallèlement à une section de l'élément formant filtre (29) et situé tout près de celle-ci, du côté de l'élément formant filtre tourné à distance du moyen formant cache (38) et dans la zone de celui-ci; le souffle d'air de nettoyage étant apte à agir pour éliminer les corps étrangers de ladite section dans ladite direction parallèle et pour évacuer les corps étrangers éliminés à distance de l'élément formant filtre (29).

14. Dispositif de filtration d'air selon la revendication 13, caractérisé en ce qu'un moyen formant conduit (44) est prévu au voisinage de l'élément formant filtre (29) et ouvert en direction dudit élément formant filtre (29) dans la zone du moyen formant cache (38); le moyen formant conduit étant apte à agir pour canaliser le souffle d'air de nettoyage dans ladite direction sensiblement parallèle par rapport à ladite section de l'élément formant filtre (29) et tout près de celle-ci, et le dispositif étant tel que les corps étrangers expulsés des perforations du filtre par l'action de nettoyage du moyen formant balai (48), sont masqués par le moyen formant cache (38) vis-à-vis de l'air aspiré dans l'élément formant filtre (29) par le ventilateur (18) et captés par le souffle d'air de nettoyage dans le moyen formant conduit (44) à travers la partie ouverte de celui-ci en vue d'être évacués en un emplacement éloigné de l'élément formant filtre.

15. Dispositif de filtration d'air selon l'une quelconque des revendications 10 à 14, caractérisé en ce que les moyens d'entraînement prévus pour l'élément formant filtre (29) comprennent une courroie (36) en contact d'entraînement avec la surface cylindrique de l'élément formant filtre (29) ou des ailettes de turbine reliées audit élément formant filtre (29) pour qu'ainsi, en service, l'élément formant filtre (29) soit entraîné par le courant d'air aspiré à travers lui par le ventilateur (18).

16. Dispositif de filtration d'air selon l'une quelconque des revendications précédentes, caractérisé en ce que le dispositif de filtration (14) est prévu dans une machine à moissonner.

17. Dispositif de filtration d'air selon la revendication 16, lorsque celle-ci est directement ou indirectement dépendante de la revendication 3, caractérisé en ce que :
- la machine à moissonner comprend un réservoir à grain et des moyens de déchargement de réservoir à grain; et
- lesdits autres moyens de commande sont aptes à agir pour commander le fonctionnement des moyens de déchargement de réservoir à grain afin de décharger le réservoir à grain à intervalles réguliers.
